# EUROPÄISCHE PATENTSCHRIFT

(11) **EP 0 920 952 B1**
(45) Veröffentlichungstag und Bekanntmachung des Hinweises auf die Patenterteilung: **02.05.2003**
(21) Anmeldenummer: 98122983.4
(22) Anmeldetag: 03.12.1998
(51) Int. Cl.: B23Q 7/04, B23Q 7/10, B65G 47/90, B65G 61/00

(54) **Palettenumsetzer**
Pallet transfer apparatus
Appareil pour transférer des palettes

(30) Priorität: 04.12.1997 DE 19753844
(43) Veröffentlichungstag der Anmeldung: 09.06.1999
(73) Patentinhaber: LIEBHERR-VERZAHNTECHNIK GmbH, 87437 Kempten (DE)
(72) Erfinder: Landerer, Roman, 87477 Sulzberg (DE)
(74) Vertreter: Klunker . Schmitt-Nilson . Hirsch

(56) Entgegenhaltungen:
- DE-A- 2 145 445
- FR-A- 1 507 613
- FR-A- 2 691 650

## Beschreibung

Die Erfindung betrifft eine Handhabungsvorrichtung, insbesondere ein Palettiergerät mit einem vertikal und horizontal verlagerbaren Greifelement zum Ergreifen und Umsetzen von Werkstücken und insbesondere zum Umstapeln von Paletten bzw. Werkstückträgern gemäß Oberbegriff von Patentanspruch 1.

Es sind verschiedene derartige Handhabungsvorrichtungen bekannt.

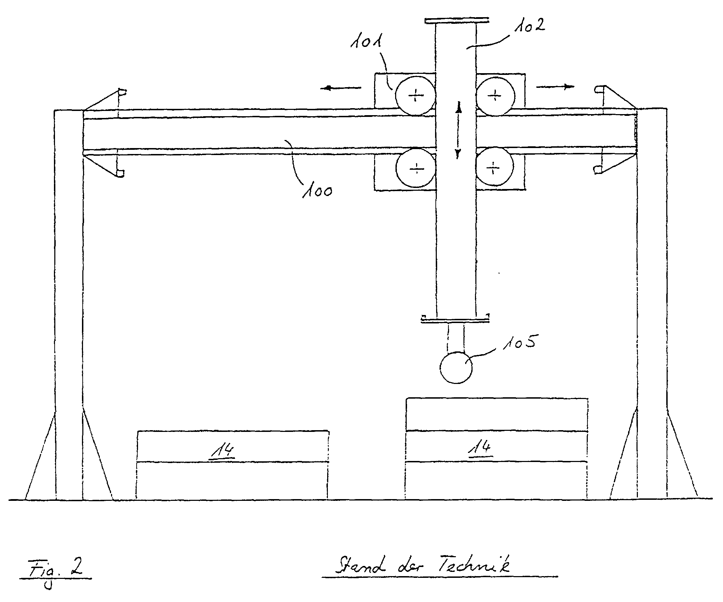

In Fig. 2 ist eine solche bekannte Vorrichtung in Kreuzschlittenbauweise schematisch dargestellt. Diese bekannte Vorrichtung weist einen Kreuzschlitten 101 auf, der auf einem Horizontalträger 100 in horizontaler Richtung verlagerbar ist, sowie einen Vertikalträger 102, der in vertikaler Richtung am Schlitten 101 verfahrbar ist. Am unteren Ende des Vertikalträgers 102 befindet sich eine Greifeinrichtung 105, mit der Rohteile von Paletten 14 entnommen, einer nicht dargestellten Bearbeitungseinrichtung zugeführt und anschließend als Fertigteile in derselben oder einer anderen Palette 14 wieder abgelegt werden.

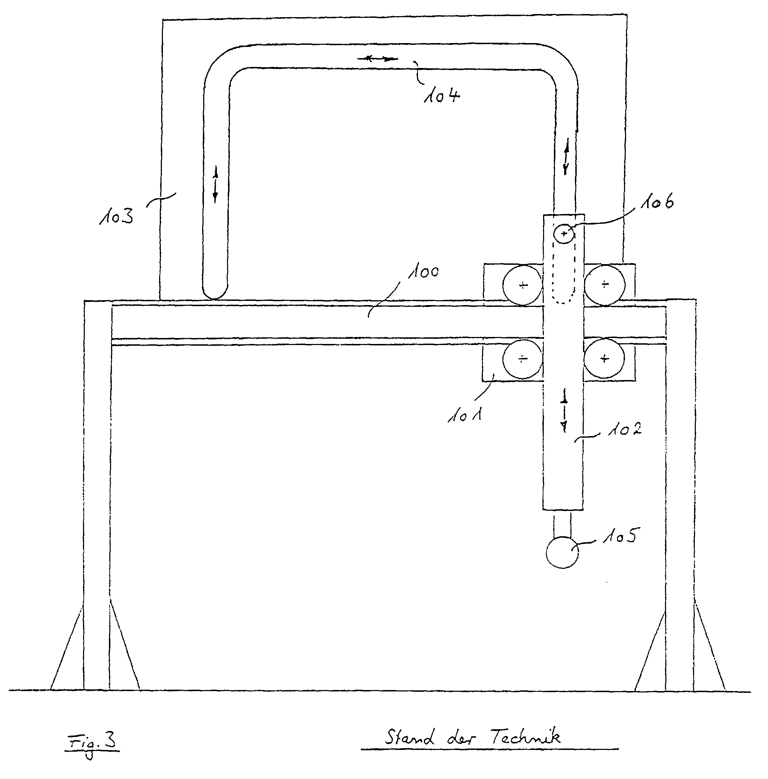

Während diese Vorrichtung zwei separat gesteuerte Achsen aufweist, ist eine weitergebildete Vorrichtung bekannt, wie sie in Fig. 3 dargestellt ist, die nur einen einzigen Antrieb erfordert. Im Unterschied zu der in Fig. 2 dargestellten Vorrichtung weist die einmotorige Vorrichtung nach Fig. 3 eine Platte 103 mit einer Führungsbahn 104 auf, in der ein Zapfen 106 des Vertikalträgers 102 zwangsgeführt wird. Mit einer nicht dargestellten geschlossenen Kettenkonstruktion, die am Zapfen 106 direkt angreift, wird der Zapfen 106 entlang der Bahn 104 bewegt. Der Vertikalträger nimmt dann den Schlitten 101 in Horizontalrichtung entlang dem Horizontalträger 100 mit, sobald der Zapfen 106 entlang dem horizontalen Bereich der Führung 104 bewegt wird. Im Vergleich zu der in Fig. 2 dargestellten Vorrichtungen ist die Vorrichtung nach Fig. 3 in ihrem Wirkungsbereich auf die vorgegebene Bahn beschränkt.

Eine Weiterbildung des in Fig. 3 gezeigten Standes der Technik wird in DE 21 45 445 A beschrieben. Anstatt den Vertikalträger 102 mit der Greifeinrichtung 105 in horizontaler und vertikaler Richtung zu verschieben, ist dieser lediglich in horizontaler Richtung verschieblich ausgebildet. Die vertikale Verlagerung der Greifeinrichtung erfolgt über einen entlang dem Vertikalträger verfahrbaren zweiten Schlitten, der die Greifeinrichtung trägt und der in der Führungsbahn 104 geführt wird.

Darüber hinaus ist aus der DE-GM 93 10 533 eine weitere einmotorige Handhabungsvorrichtung bekannt, bei der der Werkstückgreifer entlang einer Hypozykloide, die im wesentlichen der Zwangsführung 104 aus Fig. 3 entspricht, bewegt wird. Allerdings wird diese Hypozykloidenbahn nicht mittels einer Führungsbahn, sondern durch eine besonders bemessene Schwingenkonstruktion erzeugt.

Alle vorgenannten Lösungen weisen den Nachteil auf, daß sie zwar besonders geeignet sind für die Handhabung einzelner Werkstücke, daß aber die Handhabung von großen und schweren Paletten beträchtliche Biegemomente in den Führungselementen der Handhabungsvorrichtung erzeugt. Denn Paletten werden üblicherweise von der Seite ergriffen und in eine Zuführposition bewegt, aus der eine Ladevorrichtung einzelne Werkstücke ergreifen und einer nachgeordneten Bearbeitungsstation zuführen kann. Das seitliche Angreifen an den Paletten ist regelmäßig notwendig, damit die Ladevorrichtung ungehindert von oben auf die in Zuführposition gebrachte Palette zugreifen kann. Daher sind die in dem Vertikalträger erzeugten Biegemomente umso größer, je größer und schwerer die bewegte Palette ist. Die in den Figuren 2 und 3 dargestellten und in der DE 21 45 445 A offenbarten Vorrichtungen sind daher nur bedingt als Palettenumsetzer einsetzbar. Entsprechendes gilt für die aus der DE-GM 93 10 533 bekannten Vorrichtung mit Schwingenkonstruktion.

Den bekannten Vorrichtungen gemäß Figuren 2 und 3 kommt der weitere Nachteil zu, daß sie einen enormen Raumbedarf in der Höhe haben.

Aufgabe der vorliegenden Erfindung ist es daher, eine Handhabungsvorrichtung und insbesondere einen Palettenumsetzer zur Verfügung zu stellen, bei dem auftretende Biegemomente selbst bei schweren und seitlich ergriffenen Lasten so aufgenommen werden, daß die auftretenden Lagerbelastungen gering bleiben.

Die Aufgabe wird gelöst durch eine Handhabungsvorrichtung umfassend einen horizontal angeordneten Träger, einen vertikal angeordneten Träger, der mit einem oberen Abschnitt an dem Horizontalträger in horizontaler Richtung verschieblich angelenkt ist, einen auf dem Vertikalträger in vertikaler Richtung verschieblich angeordneten Schlitten mit einer Greifeinrichtung, und einer Antriebseinrichtung, die den Schlitten relativ zu dem Vertikalträger und den Vertikalträger relativ zu dem Horizontalträger bewegt, dadurch gekennzeichnet, daß der Vertikalträger an einem unteren Abschnitt entlang der horizontalen Verschieberichtung seitlich abgestützt ist.

Durch diese Konstruktion wird einerseits der Platzbedarf zu der Handhabungsvorrichtung in räumlicher Höhe wesentlich reduziert, da der Vertikalträger beim Anheben des Werkstücks bzw. der Palette nicht in vertikaler Richtung bewegt wird. Statt dessen bewegt sich nur der Schlitten in vertikaler Richtung entlang dem Vertikalträger. Darüber hinaus wird durch die seitliche Abstützung des unteren Abschnitts des Horizontalträgers eine Gegenkraft zu der an der Greifeinrichtung angreifenden Last erzeugt, so daß die in dem Vertikalträger durch die Last erzeugten Lagerkräfte gegenüber den vorbekannten Lösungen wesentlich verringert sind. Selbst bei sehr langen Hubwegen lassen sich mit dieser Vorrichtung schwere Lasten problemlos anheben.

Gemäß einer vorteilhaften Ausführungsform der Erfindung ist an dem Schlitten eine Führungseinrichtung vorgesehen, die mit einer von dem Vertikalträger unabhängigen Führungsbahn zusammenwirkt, wobei die Antriebsvorrichtung geeignet ist, die Führungseinrichtung entlang der Führungsbahn zu bewegen.

Gemäß einer besonderen Ausführungsform ist vorgesehen, daß die Antriebseinrichtung einmotorig ausgelegt ist.

Diese einmotorige Auslegung geschieht vorzugsweise mittels eines Ketten- oder Seilzugs, der an der Führungseinrichtung angreift. Auch die Verwendung eines Zahnriemens ist möglich.

Gemäß einer weiter vorteilhaften Ausführung ist vorgesehen, daß sowohl der Schlitten als auch der Vertikalträger jeweils auf Linearführungen gelagert ist. Dadurch lassen sich große Lasten auf große Bereiche verteilen.

Vorzugsweise ist die Linearführung des Vertikalträgers am Horizontalträger derart ausgebildet, daß sie keine Biegemomente um die Horizontalträgerhauptachse aufnehmen kann. Es werden somit nur Längs- und Querkräfte in die Linearführung eingeleitet.

Als seitliche Abstützung für den unteren Abschnitt des Vertikalträgers ist vorzugsweise eine Leiste vorgesehen, die gemeinsam mit zwei Stützen für den Horizontalträger einen geschlossenen Rahmen bildet. Dadurch wird eine besonders stabile Konstruktion erreicht.

Schließlich ist vorzugsweise eine Rolleneinrichtung am unteren Abschnitt des Vertikalträgers vorgesehen, die auf einer Oberfläche der Leiste abrollen kann und den Vertikalträger gegen die Leiste abstützt.

Eine besondere Ausführungsform der Erfindung wird nachfolgend beispielhaft anhand der Figuren 1 bis 5b näher erläutert.
Fig. 1 zeigt eine besondere Ausführungsform der Erfindung schematisch in Frontalansicht,
Fig. 2 zeigt eine Vorrichtung aus dem Stand der Technik,
Fig. 3 zeigt eine andere Vorrichtung aus dem Stand der Technik,
Fig. 4 zeigt eine Schnittansicht der Vorrichtung nach Fig. 1 entlang der Linie I-I schematisch von der Seite, und
Fig. 5a und 5b zeigen die Kräfteverteilungen an einer Vorrichtung aus dem Stand der Technik und an der erfindungsgemäßen Vorrichtung im Vergleich.

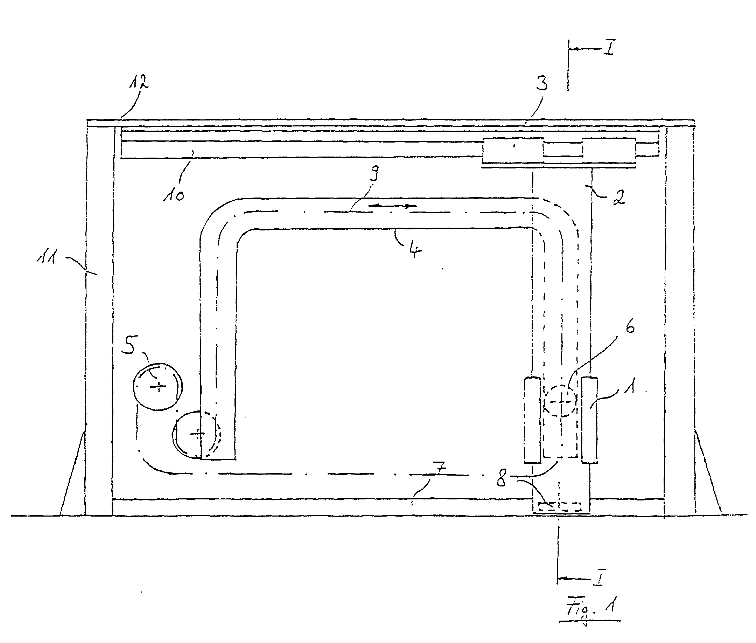

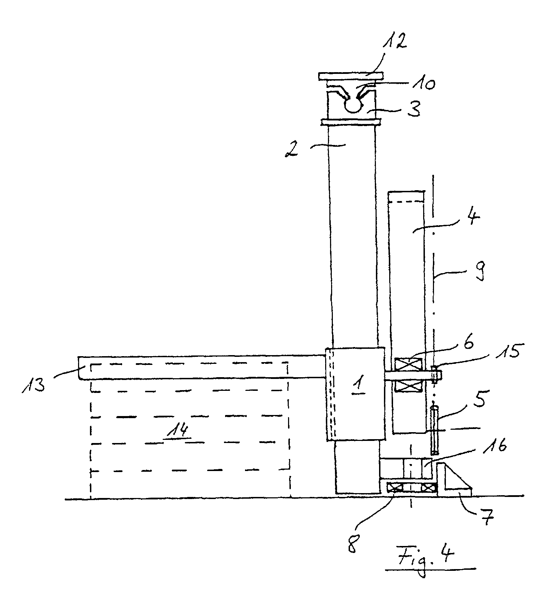

Fig. 1 zeigt einen Horizontalträger 10, 12, der auf Stützen 11 aufliegt. Die Stützen 11 sind an ihren bodennahen Enden durch eine Leiste 7 miteinander verbunden, so daß ein stabiler Rahmen geschaffen wird. Der Bestandteil 10 des Horizontalträgers bildet eine radial freie Linearführung für den oberen Abschnitt 3 eines Vertikalträgers 2. Die Gestaltung der Linearführung ist besonders gut in Fig. 4 zu sehen. Der obere Abschnitt 3 des Vertikalträgers 2 ist als Linearführung ausgebildet. Man erkennt, daß der Vertikalträger 2 innerhalb bestimmter Grenzen um den Horizontalträger radial beweglich gelagert ist (Fig. 4). Die Linearführung nimmt somit nur Quer- und Längskräfte auf.

An dem Vertikalträger 2 ist ein Schlitten 1 in Vertikalrichtung verschieblich montiert. Auch der Schlitten 1 ist linear geführt. Der Schlitten 1 weist an seiner Rückseite eine zapfenartige Führungseinrichtung auf (Fig. 4). Der Zapfen ist als Welle für ein Kugellager 6 ausgebildet, das in einer Führungsbahn 4 zwangsgeführt wird. An dem Zapfen ist desweiteren ein Ketten- oder Seilzug 9 befestigt, mit dem der Zapfen entlang der Führungsbahn 4 bewegt werden kann. Es handelt sich dabei um einen geschlossenen Kettenzug, der wie in Fig. 1 dargestellt verläuft. Um die Führung des Zapfens von dem ersten vertikalen Führungsbahnabschnitt über den horizontalen Führungsbahnabschnitt in den zweiten vertikalen Führungsbahnabschnitt zu ermöglichen, ist es notwendig, daß die Befestigung 15 des Kettenzugs 9 an dem Zapfen des Schlittens 1 drehgelagert ausgebildet ist. Dies ist in den Figuren nicht im Detail dargestellt, ist aber notwendig, da der Schlitten 1 eine Drehbewegung nicht erlaubt, denn der Schlitten 1 ist auf dem Vertikalträger 2 nur axial verschieblich gelagert.

Mit der Bezugsziffer 5 sind Antriebsräder, zum Beispiel Zahnräder, bezeichnet, die für den Antrieb des geschlossenen Kettenzugs 9 dienen.

An dem Antriebsritzel 5 kann ein Antriebsmotor angreifen. Es ist aber grundsätzlich auch denkbar, daß die Antriebseinrichtung 5, 9 und 15 zum Beispiel als Zahnrad-/Zahnstangenkonstruktion ausgebildet ist, an die ein Motor unmittelbar angeschlossen ist. Der Motor würde dann mit dem Schlitten 1 entlang der Führungsbahn 4 mitbewegt. Das würde zwar zu üblicherweise unerwünschten "bewegten Massen" führen, andererseits könnte der Motor als Gegengewicht zu der auf der vorderen Seite des Schlittens 1 angebrachten Greifeinrichtung 13 dienen. Dadurch würden die in dem Vertikalträger 2 erzeugten Biegemomente reduziert.

Entlang der Leiste 7 läuft eine Rolle 8, die über einen Befestigungsabschnitt 16 an dem Vertikalträger 2 so gelagert ist, daß die Rolle um eine vertikale Achse drehen kann. Dadurch wird erreicht, daß die einseitig an dem Schlitten 1 angreifende Last bestehend aus Greifeinrichtung 13 und aufgenommener Palette 14 ausgeglichen wird, indem die Leiste 7 eine entsprechende Gegenkraft erzeugt.

Die soeben beschriebene Konstruktion ist kompakt und stabil und benötigt nur einen einzigen Antrieb, um eine Palette 14 von einem Stapel auf einem seitlich daneben stehenden Stapel umzustapeln. Dies wird dadurch möglich, daß der Schlitten 1 mittels der Führungseinrichtung 6, 15 in den vertikalen Abschnitten der Führungsbahn 4 entlang dem Vertikalträger 2 in vertikaler Richtung zwangsgeführt wird, während der Schlitten 1 beim Übergang der Führungseinrichtung 6, 15 in den horizontalen Abschnitt der Führungsbahn 4 den Vertikalträger in horizontaler Richtung mitnimmt. Dazu ist der Horizontalträger an seinem oberen Abschnitt 3 entsprechend gelagert. Es ist somit nur ein geschlossener, an der Führungseinrichtung 6, 15 angreifender Kettenzug 9 notwendig, um den Schlitten 1 mit dem Greifer 13 entlang der Führungsbahn 4 zu bewegen. Dazu genügt ein einziger Antrieb.

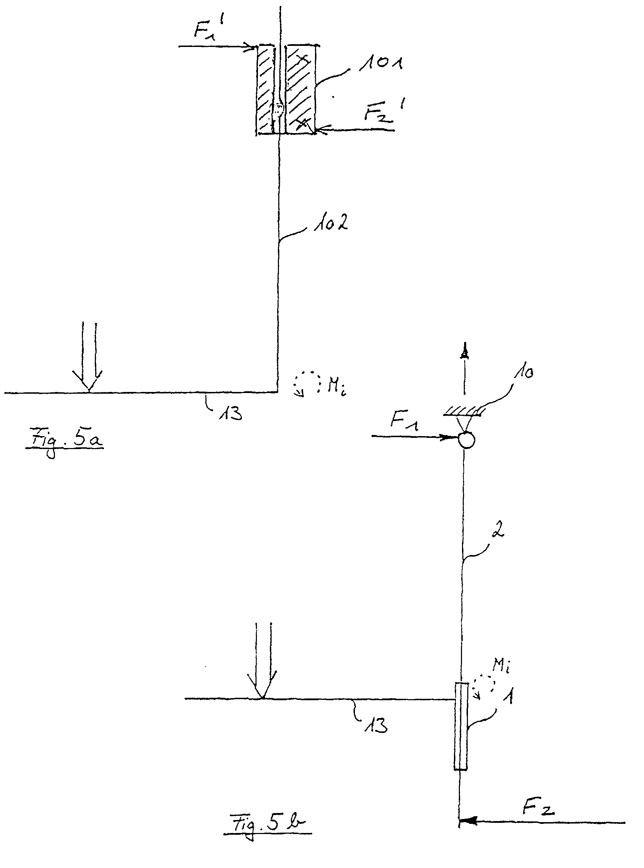

Fig. 5a zeigt die Kräfteverteilung an einer herkömmlichen Handhabungsvorrichtung, während Fig. 5b die Kräfteverteilung an einer erfindungsgemäßen Vorrichtung zeigt. Beim Stand der Technik hängen die Lagerkräfte F'₁, F'₂, die auf den nur in der Horizontalen verfahrbaren Schlitten 101 einwirken, direkt von der Stellung des Vertikalträgers 102 ab. Bei voll ausgefahrener Stellung können diese Kräfte entsprechend groß werden, was eine entsprechende konstruktive Auslegung des Schlittens und des Querträgers bedingt. Bei der Erfindung dagegen sind die auf den Schlitten 1 einwirkenden Lagerkräfte F₁, F₂ unabhängig von der Stellung des Vertikalträgers 2, sehr viel kleiner und immer gleich. Entsprechend leichter kann der Schlitten ausgelegt sein. Darüber hinaus ist die erfindungsgemäße Ausbildung wesentlich steifer als die zum Ausweichen des Vertikalträgers neigende bekannte Konstruktion.

## Patentansprüche

1. Handhabungsvorrichtung umfassend einen horizontal angeordneten Träger (10, 12), einen vertikal angeordneten Träger (2), der mit einem oberen Abschnitt (3) an dem Horizontalträger (10, 12) in horizontaler Richtung verschieblich angelenkt ist, einen auf dem Vertikalträger (2) in vertikaler Richtung verschieblich angeordneten Schlitten (1) mit einer Greifeinrichtung (13) und eine Antriebseinrichtung (5, 9), die den Schlitten (1) relativ zu dem Vertikalträger und den Vertikalträger rerelativ zu dem Horizontalträger bewegt, **dadurch gekennzeichnet, daß** der Vertikalträger (2) an einem unteren Abschnitt (8) entlang der horizontalen Verschieberichtung seitlich abgestützt ist.

2. Handhabungsvorrichtung nach Anspruch 1, **dadurch gekennzeichnet, daß** an dem Schlitten (1) eine Führungseinrichtung (6, 15) vorgesehen ist, die mit einer von dem Vertikalträger (2) unabhängigen Führungsbahn (4) zusammenwirkt, wobei die Antriebseinrichtung (5, 9) geeignet ist, die Führungseinrichtung (6, 15) entlang der Führungsbahn (4) zu bewegen.

3. Handhabungsvorrichtung nach einem der vorhergehenden Ansprüche, **dadurch gekennzeichnet, daß** die Antriebseinrichtung einmotorig ausgelegt ist.

4. Handhabungsvorrichtung nach einem der vorhergehenden Ansprüche, **dadurch gekennzeichnet, daß** die Antriebseinrichtung einen Ketten- oder Seilzug umfaßt, der an der Führungseinrichtung (6, 15) angreift.

5. Handhabungsvorrichtung nach einem der vorhergehenden Ansprüche, **dadurch gekennzeichnet, daß** die Antriebseinrichtung einen an der Führungseinrichtung (6, 15) angreifenden Motor umfaßt.

6. Handhabungsvorrichtung nach einem der vorhergehenden Ansprüche, **dadurch gekennzeichnet, daß** der Schlitten (1) und der Vertikalträger (2) jeweils auf Gleitführungen gelagert sind.

7. Handhabungsvorrichtung nach einem der vorhergehenden Ansprüche, **dadurch gekennzeichnet, daß** die Gleitlagerung des Vertikalträgers (2) derart ausgebildet ist, daß der Vertikalträger (2) innerhalb bestimmter Grenzen um den Horizontalträger (10, 12) radial beweglich ist.

8. Handhabungsvorrichtung nach einem der vorhergehenden Ansprüche, **dadurch gekennzeichnet, daß** als seitliche Ab-Abstützung für den unteren Abschnitt (8) des Vertikalträgers (2) eine Leiste (7) vorgesehen ist, die gemeinsam mit zwei Stützen (11) für den Horizontalträger (10, 12) einen geschlossenen Rahmen bildet.

9. Handhabungsvorrichtung nach einem der vorhergehenden Ansprüche, **dadurch gekennzeichnet, daß** an dem unteren Abschnitt des Vertikalträgers (2) eine Rolleneinrichtung (8, 16) zum Abstützen des Vertikalträgers (2) gegen die Leiste (7) und zum Abrollen auf einer Oberfläche der Leiste (7) vorgesehen ist.

## Claims

1. A handling apparatus comprising a horizontally disposed beam (10, 12), a vertically disposed beam (2) linked with an upper portion (3) to the horizontal beam (10, 12) so as to slide in the horizontal direction, a slide (1) disposed on the vertical beam (2) so as to slide in the vertical direction and having a gripping device (13), and a driving device (5, 9) for moving the slide (1) relative to the vertical beam and the vertical beam relative to the horizontal beam, **characterized in that** the vertical beam (2) is laterally supported on a lower portion (8) along the horizontal sliding direction.

2. A handling device according to claim 1, **characterized in that** a guide device (6, 15) is provided on the slide (1) for cooperating with a guideway (4) independent of the vertical beam (2), the driving device (5, 9) being suitable for moving the guide device (6, 15) along the guideway (4).

3. A handling device according to either of the above claims, **characterized in that** the driving device is designed with a single motor.

4. A handling device according to any of the above claims, **characterized in that** the driving device includes a chain block or pulley that acts upon the guide device (6, 15).

5. A handling device according to any of the above claims, **characterized in that** the driving device includes a motor acting upon the guide device (6, 15).

6. A handling device according to any of the above claims, **characterized in that** the slide (1) and the vertical beam (2) are each mounted on slideways.

7. A handling device according to any of the above claims, **characterized in that** the sliding bearing of the vertical beam (2) is formed so that the vertical beam (2) is movable radially about the horizontal beam (10, 12) within certain limits.

8. A handling device according to any of the above claims, **characterized in that** a ledge (7) is provided as a lateral support for the lower portion (8) of the vertical beam (2) and forms together with two supports (11) for the horizontal beam (10, 12) a closed frame.

9. A handling device according to any of the above claims, **characterized in that** a roller device (8, 16) is provided on the lower portion of the vertical beam (2) for supporting the vertical beam (2) against the ledge (7) and for rolling on a surface of the ledge (7).

## Revendications

1. Appareil pour transférer des palettes comprenant un support (10, 12) disposé horizontalement, un support (2) disposé verticalement et articulé, de façon mobile, dans le sens horizontal, avec un segment (3) supérieur, au niveau du support horizontal (10, 12), un chariot (1) placé de façon mobile dans le sens vertical sur le support vertical (2), présentant un dispositif de prise (13) et un mécanisme de commande (5, 9) qui déplace le chariot (1), par rapport au support vertical, et le support vertical, par rapport au support horizontal, **caractérisé en ce que** le support vertical (2) est appuyé, latéralement, au niveau d'un segment (8) inférieur, suivant le sens horizontal de déplacement.

2. Appareil pour transférer des palettes selon la revendication 1, **caractérisé en ce qu'**il est prévu, au niveau du chariot (1), un dispositif de guidage (6, 15), concourant avec une glissière (4) indépendante du support vertical (2), sachant que le mécanisme de commande (5, 9) est capable de déplacer le dispositif de guidage (6, 15) le long de la glissière (4).

3. Appareil pour transférer des palettes selon l'une des revendications précédentes, **caractérisé en ce que** le mécanisme de commande est monomoteur.

4. Appareil pour transférer des palettes selon l'une des revendications précédentes, **caractérisé en ce que** le mécanisme de commande comprend un palan à chaîne ou un tirant à câble qui agit au niveau du dispositif de guidage (6, 15).

5. Appareil pour transférer des palettes selon l'une des revendications précédentes, **caractérisé en ce que** le mécanisme de commande comprend un moteur agissant au niveau du dispositif de guidage (6, 15).

6. Appareil pour transférer des palettes selon l'une des revendications précédentes, **caractérisé en ce que** le chariot (1) et le support vertical (2) sont respectivement logés sur des guidages à glissement.

7. Appareil pour transférer des palettes selon l'une des revendications précédentes, **caractérisé en ce que** le positionnement de glissement du support vertical (2) est conçu de telle sorte que le support vertical (2) est mobile, radialement, au sein de limites définies, autour du support horizontal (10, 12).

8. Appareil pour transférer des palettes selon l'une des revendications précédentes, **caractérisé en ce qu'**il est prévu, en tant qu'appui latéral pour le segment inférieur (8) du support vertical (2), une barre de guidage (7), formant un cadre fermé avec les deux appuis (11) pour le support horizontal (10, 12).

9. Appareil pour transférer des palettes selon l'une des revendications précédentes, **caractérisé. en ce qu'**il est prévu, au niveau du segment inférieur du support vertical (2) un dispositif de roulement (8, 16) pour appuyer le support vertical (2) contre la barre de guidage (7) et pour rouler sur une surface de ladite barre (7).
